# FASCICULE DE BREVET EUROPEEN

(11) **EP 2 932 236 B1**
(45) Date de publication et mention de la délivrance du brevet: **24.08.2016**
(21) Numéro de dépôt: 13802946.7
(22) Date de dépôt: 09.12.2013
(51) Int. Cl.: G01N 21/17, G01B 11/30

(54) **DISPOSITIF DE PHOTO REFLECTANCE**
LICHTREFKLEKTIERENDE VORRICHTUNG
PHOTOREFLECTANCE DEVICE

(30) Priorité: 11.12.2012 FR 1261870
(43) Date de publication de la demande: 21.10.2015
(73) Titulaire: Nexcis, 13790 Rousset (FR); Université d'Aix Marseille, 13284 Marseille Cedex 07 (FR)
(72) Inventeur: MOREAU, Antonin, F-13790 Rousset Cedex (FR); BERMUDEZ, Véronica, F-13790 Rousset Cedex (FR); ESCOUBAS, Ludovic, F-13013 Marseille (FR); SIMON, Jean-Jacques, F-13124 Peypin (FR)
(74) Mandataire: Cabinet Camus Lebkiri
(86) Numéro de dépôt international: PCT/EP2013/075954
(87) Numéro de publication internationale: WO 2014/090748

(56) Documents cités:
- US-A- 4 360 275
- US-A- 5 159 410
- US-A- 5 982 499
- US-A1- 2010 284 014

## Description

### DOMAINE TECHNIQUE

La présente invention concerne un dispositif de photoréflectance pour la caractérisation d'une surface rugueuse ou diffusante.

### ETAT DE LA TECHNIQUE ANTERIEUR

La photoréflectance est un procédé non destructif permettant de sonder sans contact notamment des échantillons semi-conducteurs. Les dispositifs de photoréflectance de l'art antérieur utilisent généralement un faisceau sonde monochromatique pour mesurer l'intensité lumineuse réfléchie à la surface d'un échantillon au moyen d'un photodétecteur. Un second faisceau, appelé faisceau pompe, qui est un faisceau laser présentant une énergie photonique supérieure à la largeur de gap de l'échantillon, est également utilisé pour irradier la surface de l'échantillon de façon à générer une paire électron/trou, ce qui modifie les propriétés diélectriques de l'échantillon au voisinage de sa surface, et par conséquent la réflectivité de l'échantillon pour certaines longueurs d'ondes. La variation d'intensité lumineuse issue du faisceau sonde et réfléchie par la surface de l'échantillon est mesurée, le plus souvent à l'aide de moyens de détection synchrone. On peut ainsi tracer un spectre de photoréflectance qui est définit comme le changement relatif de la réflexion du faisceau sonde sur l'échantillon induite par le faisceau pompe. Ce spectre de photoréflectance est mesuré sur une large gamme spectrale, ce qui permet de caractériser des matériaux semi-conducteurs, des hétérostructures semi-conductrices, ou encore des interfaces semi-conductrices.

De tels dispositifs de photoréflectance sont par exemple décrits dans les documents US5255070, US5255071, US5270797, US5159410, US5172191, US5365334, US7755752, US6195166, US5982499, US7239392.

Lorsque la surface que l'on veut caractériser est plane, la collimation et la focalisation du faisceau sonde réfléchi ne sont pas critiques car la majeure partie de la lumière réfléchie détectée correspond au faisceau sonde réfléchi. Par conséquent, le flux lumineux sonde réfléchi est important et peut donc facilement être détecté. De la même manière, la réflexion du faisceau pompe est spéculaire et n'est donc pas détectée, ce qui permet de ne pas parasiter la mesure du faisceau sonde réfléchi. En effet, le faisceau pompe sert uniquement à modifier localement les propriétés diélectriques du matériau et il ne doit en aucun cas être détecté.

Par contre, lorsque la surface que l'on veut caractériser est rugueuse, une partie importante du faisceau sonde est diffusée au lieu d'être réfléchie, et par conséquent, l'intensité du faisceau sonde réfléchi est faible. Le signal réfléchi détecté est donc faible et le rapport signal sur bruit est très mauvais. En outre, le faisceau pompe est lui aussi diffusé et par conséquent, une partie du faisceau pompe diffusé est captée par les moyens de détection, ce qui parasite la mesure du signal sonde réfléchi.

### EXPOSE DE L'INVENTION

L'invention vise à remédier aux inconvénients de l'état de la technique en proposant un dispositif de photoréflectance qui permet de maximiser le rapport signal sur bruit lors d'une mesure de photoréflectance, y compris lorsque la surface sondée présente une forte rugosité.

Pour ce faire, est proposé selon un premier aspect de l'invention, un dispositif de photoréflectance pour la caractérisation d'une surface rugueuse comportant :
- Des moyens d'émission d'un faisceau sonde, dits « moyens d'émission sonde » ;
- Des moyens d'émission d'un faisceau pompe, dits « moyens d'émission pompe » ;
- Des moyens de détection aptes à détecter un faisceau réfléchi par la surface ;
- Une sphère intégrante pouvant être disposée de façon à collecter le faisceau sonde réfléchi par la surface, la sphère intégrante comportant :
   - une première sortie à laquelle sont reliés les moyens de détection, la première sortie étant disposée de façon à recevoir une majorité du faisceau sonde réfléchi par la surface ;
   - une deuxième sortie agencée de façon à recevoir une majorité du faisceau pompe réfléchi par la surface.

La sphère intégrante permet d'augmenter la quantité de lumière issue du faisceau sonde qui est captée par les moyens de détection. En effet, la sphère intégrante permet de collecter la lumière issue du faisceau sonde et diffusée par les rugosités afin de la transmettre aux moyens de détection. En outre, la deuxième sortie permet d'évacuer le faisceau pompe de la sphère intégrante afin de ne pas le transmettre aux moyens de détection.

Avantageusement, le dispositif de photoréflectance comporte en outre un filtre passe haut disposé entre la première sortie de la sphère intégrante et les moyens de détection. Ce filtre passe haut permet de filtrer le faisceau pompe afin de ne pas le transmettre aux moyens de détection.

Selon un mode de réalisation préférentiel, le dispositif de photoréflectance comprend en outre des premiers moyens de modulation aptes à moduler le faisceau sonde à une fréquence différente de celle du faisceau pompe. Le fait de moduler le faisceau sonde à une fréquence différente de celle du faisceau pompe permet de ne récupérer que le signal utile pour caractériser la surface.

Avantageusement, le dispositif de photoréflectance comporte en outre des seconds moyens de modulation aptes à moduler le faisceau pompe en fréquence. Le fait de moduler à la fois le faisceau pompe et le faisceau sonde permet d'éliminer les composantes de luminescence et de diffusion Rayleigh et de diffusion directe du faisceau pompe (laser).

Le dispositif de photoréflectance comporte en outre de préférence des moyens d'amplification aptes à amplifier un signal reçu par les moyens de détection, ce qui permet d'avoir un signal plus facilement exploitable.

La sphère intégrante est de préférence positionnée à distance de l'échantillon de façon à ne pas l'endommager. Le dispositif permet ainsi de réaliser des mesures sans contact.

Par ailleurs, la sphère intégrante peut de préférence se déplacer parallèlement à la surface de l'échantillon de façon à sonder l'ensemble de la surface de l'échantillon. La sphère intégrante se déplace avec le point de focalisation des faisceaux sonde et pompe.

Les moyens d'émission sonde comportent de préférence une source lumineuse Polychromatique ou monochromatique accordable.

Les moyens d'émission pompe comportent de préférence un laser émettant des photons dont l'énergie peut être réglée en fonction du « band gap » du semiconducteur ou du gap d'énergie du semiconducteur.

Selon différents modes de réalisation :
- Les moyens de détection peuvent être reliés directement à la première sortie de la sphère intégrante, ce qui permet de limiter les déperditions de signal ou alors
- Les moyens de détection peuvent être reliés à la première sortie de la sphère intégrante via une fibre optique, ce qui permet de pouvoir déplacer plus facilement la sphère intégrante à la surface de l'échantillon à sonder, puisque ainsi les moyens de détection ne sont pas forcément solidaires de la sphère de détection, et par conséquent, ils n'ont pas à se déplacer simultanément à la sphère intégrante.

### BREVES DESCRIPTION DES FIGURES

D'autres caractéristiques et avantages de l'invention ressortiront à la lecture de la description détaillée qui suit, en référence aux figures annexées, qui illustrent :
- La figure 1, un dispositif de photoréflectance selon un mode de réalisation de l'invention ;
- La figure 2, la sphère intégrante et les moyens de détection du dispositif de la figure 1 ;
- La figure 3, un mode de réalisation alternatif de la figure 3.

Pour plus de clarté, les éléments identiques ou similaires sont repérés par des signes de références identiques sur l'ensemble des figures.

### DESCRIPTION DETAILLEE D'AU MOINS UN MODE DE REALISATION

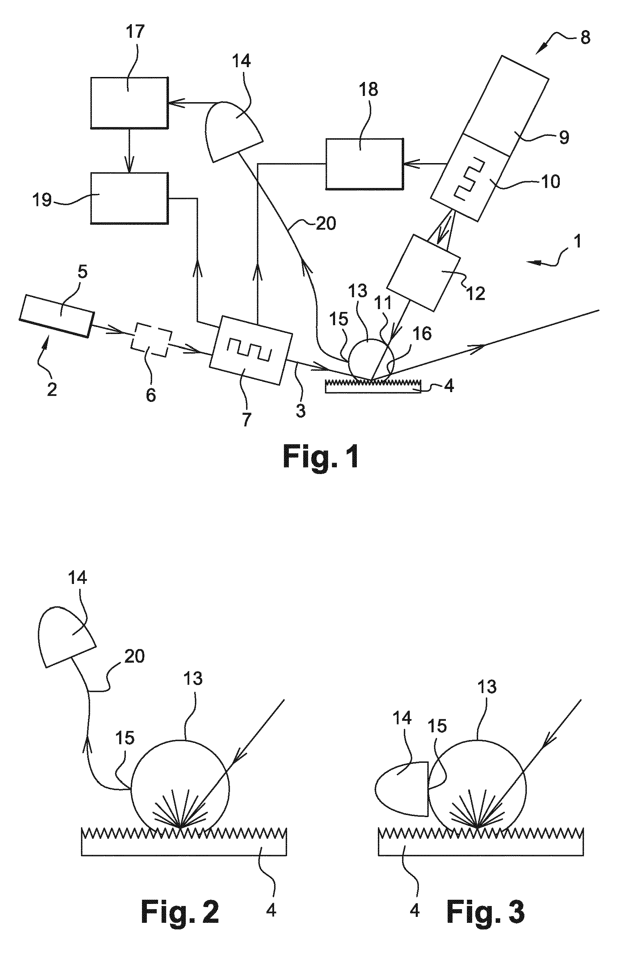

La figure 1 représente un dispositif de photoréflectance selon un mode de réalisation de l'invention permettant de caractériser la surface 4 d'un échantillon. Ce dispositif de photoréflectance 1 comporte des moyens d'émission pompe 2 aptes à émettre un faisceau pompe 3. Ce faisceau pompe 3 est réfléchi par l'échantillon. Les moyens d'émission pompe 2 du faisceau pompe comportent de préférence :
- un laser 5 émettant des photons dont l'énergie peut être réglée en fonction de l'énergie de gap du matériau à caractériser ;
- un filtre gris neutre à densité variable 6 permettant de régler le flux lumineux pompe sur l'échantillon. Alternativement, au lieu d'utiliser ce filtre à densité variable neutre 6, on peut aussi régler la puissance sur l'alimentation du laser pompe.;
- des seconds moyens de modulations 7 aptes à moduler le faisceau pompe en fréquence.

Le dispositif de photoréflectance comporte en outre des moyens d'émission sonde 8 aptes à émettre un faisceau sonde 11. Ces moyens d'émission sonde 8 comportent de préférence :
- une source lumineuse polychromatique ou monochromatique accordable 9 ;
- des premiers moyens de modulation 10 aptes à moduler le faisceau sonde en fréquence ;
- des moyens de collimation 12 aptes à rendre et à maintenir parallèles les rayons du faisceau sonde 11.

Le dispositif de photoréflectance comporte également une sphère intégrante 13 qui permet de collecter le faisceau sonde qui est réfléchi et diffusé par la surface de l'échantillon. La sphère intégrante présente de préférence un diamètre compris entre 800 et 1200 mm.

Le dispositif de photoréflectance comporte également des moyens de détection 14 qui permettent de détecter le faisceau sonde 11 réfléchi par la surface de l'échantillon. Les moyens de détection 14 comportent de préférence un détecteur lumineux synchrone.

La sphère intégrante comporte :
- une première sortie 15 à laquelle sont reliés les moyens de détection 14, la première sortie étant disposée de façon à recevoir une majorité du faisceau sonde 11 réfléchi par la surface rugueuse ;
- une deuxième sortie 16 agencée de façon à recevoir le faisceau spéculaire du faisceau pompe 3 réfléchi par la surface rugueuse.

Comme représenté sur la figure 3, la première sortie 15 peut être reliée directement aux moyens de détection 14, ou alors comme représenté sur les figures 1 et 2 par l'intermédiaire d'une fibre optique 20.

Le dispositif de photoréflectance comporte également des moyens d'amplification 17 reliés aux moyens de détection et permettant d'amplifier le signal reçu par les moyens de détection.

Le dispositif de photoréflectance comporte également des premiers moyens de détection synchrone 18 permettant une extraction efficace du signal.

Le dispositif de photoréflectance comporte également des seconds moyens de détection synchrone 19 permettant une extraction efficace du signal.

Le fonctionnement du dispositif de photoréflectance va maintenant être détaillé.

Le faisceau sonde 11 et le faisceau pompe 3 sont focalisés au même endroit de l'échantillon, c'est-à-dire à l'endroit de la surface de l'échantillon que l'on veut caractériser. Le faisceau pompe 3 irradie la surface 4 de l'échantillon ce qui créé un effet photovoltaïque au voisinage de la surface de l'échantillon à travers la génération de paires électrons/trous, modifiant ainsi localement les propriétés diélectriques. Le faisceau sonde 11 est réfléchi par la surface de l'échantillon. La réflexion du faisceau sonde 11 est modifiée par le faisceau pompe. Le spectre photo-réflechi est défini comme le changement relatif de la réflexion du faisceau sonde induite par le faisceau pompe.

La sphère intégrante 13 permet de collecter l'intensité du faisceau sonde qui est réfléchi et diffusé par la surface de l'échantillon. La deuxième sortie 16 de la sphère intégrante permet de laisser sortir la réflexion spéculaire du faisceau pompe réfléchi par l'échantillon de façon à ne pas le transmettre aux moyens de détection.

En outre, le fait de moduler le faisceau sonde par les premiers moyens de modulation permet de ne transmettre aux moyens de détection que l'intensité issue du faisceau sonde, sans transmettre des parties du faisceau pompe. Ce principe de modulation à double fréquence est utilisé pour la première fois par Lu. C R et al, 1990, "Photoreflectance study of the internal electric fields at the n-type GaAs surface and across the n-type GaAs/substrate interface", Superlattices and microstructures, 8(2), pp. 155-157. Une expliquation plus détaillée est fournie par Plaza et al. (2007). Photoluminescence-free photoreflectance spectra using dual frequency modulation. Journal of Applied Physics, 102(9), 093507. Et Ghosh et al. Ghosh (1998). Photoreflectance spectroscopy with white light pump beam. Review of Scientific Instruments, 69(3), 1261.

En outre, la double modulation du faisceau pompe et du faisceau sonde permet d'éliminer les composantes de luminescence et de diffusion Rayleigh et de diffusion directe du faisceau pompe

Le dispositif selon l'invention peut notamment être utilisé pour effectuer des contrôles non-destructif pour l'industrie du photovoltaïque.

On pourra notamment utiliser un détecteur multicanaux comme moyens de détection, ce qui permet de réaliser l'acquisition d'un signal à plusieurs longueurs d'onde simultanément.

## Revendications

1. Dispositif de photoréflectance (1) pour la caractérisation d'une surface rugueuse comportant :
- Des moyens d'émission pompe (2) aptes à émettre un faisceau pompe (3) ;
- Des moyens d'émission sonde (8) aptes à émettre un faisceau sonde (11);
- Des moyens de détection (14) aptes à détecter un faisceau réfléchi par la surface ;
**Caractérisé en ce qu'**il comporte en outre :
- Une sphère intégrante (13) pouvant être disposée de façon à collecter le faisceau sonde réfléchi par la surface, la sphère intégrante comportant :
- une première sortie (15) à laquelle sont reliés les moyens de détection (14), la première sortie (15) étant disposée de façon à recevoir une majorité du faisceau sonde (11) réfléchi par la surface (4);
- une deuxième sortie (16) agencée de façon à recevoir la réflexion spéculaire du faisceau pompe (3) réfléchi par la surface.

2. Dispositif de photoréflectance (1) selon la revendication précédente, comportant en outre des premiers moyens de modulation (10) aptes à moduler le faisceau sonde (11) à une fréquence différente de celle du faisceau pompe (3).

3. Dispositif de photoréflectance selon l'une des revendications précédentes, comportant en outre des seconds moyens de modulation (7) aptes à moduler le faisceau pompe (3) en fréquence.

4. Dispositif de photoréflectance selon l'une des revendications précédentes, comportant en outre des moyens d'amplification (17) aptes à amplifier un signal reçu par les moyens de détection (14).

5. Dispositif de photoréflectance (1) selon l'une des revendications précédentes, dans lequel les moyens d'émission sonde (8) du faisceau sonde comportent une source lumineuse monochromatique (9).

6. Dispositif de photoréflectance (1) selon l'une des revendications précédentes, dans lequel les moyens d'émission pompe (2) du faisceau pompe comportent un laser (5) émettant des photons dont l'énergie peut être réglée en fonction de l"énergie de gap du matériau à caractériser.

7. Dispositif de photoréflectance (1) selon l'une des revendications 1 à 6, dans lequel les moyens de détection (14) sont reliés directement à la première sortie (15) de la sphère intégrante.

8. Dispositif de photoréflectance selon l'une des revendications 1 à 6, dans lequel les moyens de détection (14) sont reliés à la première sortie (15) de la sphère intégrante (13) via une fibre optique (20).

## Patentansprüche

1. Photoreflexionsvorrichtung (1) für die Charakterisierung einer rauen Oberfläche, umfassend:
- Pumpenemissionsmittel (2), die geeignet sind, einen Pumpenstrahl (3) auszugeben;
- Sondenemissionsmittel (8), die geeignet sind, einen Sondenstrahl (11) auszugeben;
- Detektionsmittel (14), die geeignet sind, einen von der Oberfläche reflektierten Strahl zu detektieren;
**Dadurch gekennzeichnet, dass** sie darüber hinaus umfasst:
- eine Ulbricht-Kugel (13), die derart angeordnet sein kann, dass der von der Oberfläche reflektierte Sondenstrahl aufgefangen wird, wobei die Ulbricht-Kugel umfasst:
- einen ersten Ausgang (15), an den die Detektionsmittel (14) angeschlossen sind, wobei der erste Ausgang (15) derart angeordnet ist, dass eine Mehrheit des von der Oberfläche (4) reflektierten Sondenstrahls (11) empfangen wird;
- einen zweiten Ausgang (16), der derart angeordnet ist, dass die gerichtete Reflektion des von der Oberfläche reflektierten Pumpenstrahls (3) empfangen wird.

2. Photoreflexionsvorrichtung (1) gemäß dem voranstehenden Anspruch, umfassend darüber hinaus erste Modulationsmittel (10), die geeignet sind, den Sondenstrahl (11) in einer von der des Pumpenstrahls (3) unterschiedlichen Frequenz zu modulieren.

3. Photoreflexionsvorrichtung gemäß einem der voranstehenden Ansprüche, umfassend darüber hinaus zweite Modulationsmittel (7), die geeignet sind, den Pumpenstrahl (3) in der Frequenz zu modulieren.

4. Photoreflexionsvorrichtung gemäß einem der voranstehenden Ansprüche, umfassend darüber hinaus Amplifizierungsmittel (17), die geeignet sind, ein von den Detektionsmitteln (14) empfangenes Signal zu amplifizieren.

5. Photoreflexionsvorrichtung (1) gemäß einem der voranstehenden Ansprüche, bei der die Sondenemissionsmittel (8) des Sondenstrahls eine monochromatische Lichtquelle (9) umfassen.

6. Photoreflexionsvorrichtung (1) gemäß einem der voranstehenden Ansprüche, bei der die Pumpenemissionsmittel (2) des Pumpenstrahls einen Laser (5) umfassen, der Photonen ausgibt, deren Energie in Abhängigkeit von der Gap-Energie des zu charakterisierenden Materials eingestellt sein kann.

7. Photoreflexionsvorrichtung (1) gemäß einem der Ansprüche 1 bis 6, bei der die Detektionsmittel (14) direkt an den ersten Ausgang (15) der Ulbricht-Kugel angeschlossen sind.

8. Photoreflexionsvorrichtung gemäß einem der Ansprüche 1 bis 6, bei der die Detektionsmittel (14) an den ersten Ausgang (15) der Ulbricht-Kugel (13) über eine Glasfaser (20) angeschlossen sind.

## Claims

1. Photoreflectance device (1) for characterising a rough surface comprising:
- Pump emitting means (2) able to emit a pump beam (3) ;
- Probe emitting means (8) able to emit a probe beam (11);
- Means for detecting (14) able to detect a beam reflected by the surface;
**Characterised in that** it further comprises:
- An integrating sphere (13) that can be arranged in such a way as to collect the probe beam reflected by the surface, with the integrating sphere comprising:
- a first output (15) to which are connected the detection means (14), with the first output (15) being arranged in such a way as to receive a majority of the probe beam (11) reflected by the surface (4);
- a second output (16) arranged in such a way as to receive the specular reflection of the pump beam (3) reflected by the surface.

2. Photoreflectance device (1) as claimed in the preceding claim, further comprising first means of modulation (10) able to modulate the probe beam (11) at a frequency that is different from that of the pump beam (3).

3. Photoreflectance device according to one of the preceding claims, further comprising second means of modulation (7) able to modulate the pump beam (3) in frequency.

4. Photoreflectance device according to one of the preceding claims, further comprising means for amplifying (17) able to amplify a signal received by the detection means (14).

5. Photoreflectance device (1) according to one of the preceding claims, wherein the probe emitting means (8) of the probe beam comprise a monochromatic light source (9).

6. Photoreflectance device (1) according to one of the preceding claims, wherein the pump emitting means (2) of the pump beam comprise a laser (5) emitting photons of which the energy can be regulated according to the gap energy of the material to be characterised.

7. Photoreflectance device (1) according to one of claims 1 to 6, wherein the detection means (14) are directly connected to the first output (15) of the integrating sphere.

8. Photoreflectance device according to one of claims 1 to 6, wherein the detection means (14) are connected to the first output (15) of the integrating sphere (13) via an optical fibre (20).
